# EUROPEAN PATENT APPLICATION

(11) **EP 1 689 156 A1**
(43) Date of publication of application: **09.08.2006**
(21) Application number: 06101166.4
(22) Date of filing: 01.02.2006
(51) Int. Cl.: H04M 7/00, H04M 3/42

(54) **Notification of a calling party about the status of the called endpoint**

(30) Priority: 02.02.2005 US 49253
(71) Applicant: AT&T Corp., New York, NY 10013-2412 (US)
(72) Inventor: Croak, Marian, Fair Haven NJ 07704 (US); Eslambolchi, Hossein, Los Altos Hills California 94022 (US)
(74) Representative: Harding, Richard Patrick

(57) **Abstract**

The present invention enables a packet-switched network, e.g., a VolP network, to play a network announcement as to the true status of a subscribed residential user on busy or unanswered conditions. The called party can subscribe to this service feature so that callers, the calling parties, will be informed that either the user is busy or that the user is not present to receive a call.

## Description

The present invention relates generally to communication networks and, more particularly, to a method and apparatus for notifying the calling party about the status of the called endpoint in packet switched networks, e.g. Voice over Internet Protocol (VoIP) networks.

### BACKGROUND OF THE INVENTION

Callers to residential VoIP service subscribers will have their calls redirected to voice mail on busy or no answer conditions. If callers know that a called party is engaged in conversation they will frequently call back until the called party is available. Alternatively, they will tend to just hang up or leave a voice message if the party is truly not present. However, the calling party usually does not have the information of the status of the called party endpoint when the call is redirected to voice mail.

Therefore, a need exists for a method and apparatus for notifying the calling party about the status of the called endpoint in packet switched networks, e.g. VoIP networks.

### SUMMARY OF THE INVENTION

In one embodiment, the present invention enables the packet switched network, e.g. a VoIP network, to play a network announcement as to the true status of a subscriber, e.g., whether the subscriber is busy or is not answering the call. The called party can subscribe to this service feature so that callers, the calling parties, will be informed that either the user is busy or that the user is not present to receive a call.

The teaching of the present invention can be readily understood by considering the following detailed description in conjunction with the accompanying drawings, in which:

FIG. 1 illustrates an exemplary Voice over Internet Protocol (VoIP) network related to the present invention;

FIG. 2 illustrates an example of notifying the calling party about the status of the called endpoint in a VoIP network of the present invention;

FIG. 3 illustrates a flowchart of a method for notifying the calling party about the status of the called endpoint in a VoIP network of the present invention;

FIG. 4 illustrates a flowchart of a method for determining the status of the called endpoint in a VolP network of the present invention; and

FIG. 5 illustrates a high level block diagram of a general purpose computer suitable for use in performing the functions described herein.

To facilitate understanding, identical reference numerals have been used, where possible, to designate identical elements that are common to the figures.

### DETAILED DESCRIPTION

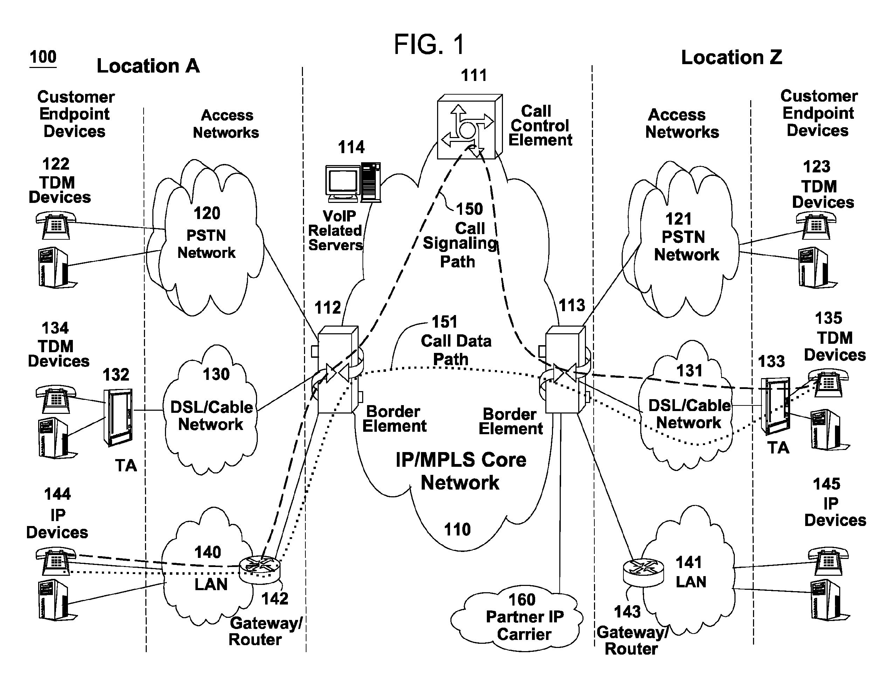

To better understand the present invention, FIG. 1 illustrates an example network, e.g., a packet-switched network such as a VoIP network related to the present invention. The VoIP network may comprise various types of customer endpoint devices connected via various types of access networks to a carrier (a service provider) VolP core infrastructure over an Internet Protocol/Multi-Protocol Label Switching (IP/MPLS) based core backbone network. Broadly defined, a VoIP network is a network that is capable of carrying voice signals as packetized data over an IP network. An IP network is broadly defined as a network that uses Internet Protocol to exchange data packets.

The customer endpoint devices can be either Time Division Multiplexing (TDM) based or IP based. TDM based customer endpoint devices 122, 123, 134, and 135 typically comprise of TDM phones or Private Branch Exchange (PBX). IP based customer endpoint devices 144 and145 typically comprise IP phones or PBX. The Terminal Adaptors (TA) 132 and 133 are used to provide necessary interworking functions between TDM customer endpoint devices, such as analog phones, and packet based access network technologies, such as Digital Subscriber Loop (DSL) or Cable broadband access networks. TDM based customer endpoint devices access VoIP services by using either a Public Switched Telephone Network (PSTN) 120, 121 or a broadband access network via a TA 132 or 133. IP based customer endpoint devices access VolP services by using a Local Area Network (LAN) 140 and 141 with a VoIP gateway or router 142 and 143, respectively.

The access networks can be either TDM or packet based. A TDM PSTN 120 or 121 is used to support TDM customer endpoint devices connected via traditional phone lines. A packet based access network, such as Frame Relay, ATM, Ethernet or IP, is used to support IP based customer endpoint devices via a customer LAN, e.g., 140 with a VoIP gateway and router 142. A packet based access network 130 or 131, such as DSL or Cable, when used together with a TA 132 or 133, is used to support TDM based customer endpoint devices.

The core VoIP infrastructure comprises of several key VoIP components, such the Border Element (BE) 112 and 113, the Call Control Element (CCE) 111, and VoIP related servers 114. The BE resides at the edge of the VoIP core infrastructure and interfaces with customers endpoints over various types of access networks. A BE is typically implemented as a Media Gateway and performs signaling, media control, security, and call admission control and related functions. The CCE resides within the VoIP infrastructure and is connected to the BEs using the Session Initiation Protocol (SIP) over the underlying IP/MPLS based core backbone network 110. The CCE is typically implemented as a Media Gateway Controller and performs network wide call control related functions as well as interacts with the appropriate VoIP service related servers when necessary. The CCE functions as a SIP back-to-back user agent and is a signaling endpoint for all call legs between all BEs and the CCE. The CCE may need to interact with various VoIP related servers in order to complete a call that require certain service specific features, e.g. translation of an E.164 voice network address into an IP address.

For calls that originate or terminate in a different carrier, they can be handled through the PSTN 120 and 121 or the Partner IP Carrier 160 interconnections. For originating or terminating TDM calls, they can be handled via existing PSTN interconnections to the other carrier. For originating or terminating VolP calls, they can be handled via the Partner IP carrier interface 160 to the other carrier.

In order to illustrate how the different components operate to support a VoIP call, the following call scenario is used to illustrate how a VoIP call is setup between two customer endpoints. A customer using IP device 144 at location A places a call to another customer at location Z using TDM device 135. During the call setup, a setup signaling message is sent from IP device 144, through the LAN 140, the VoIP Gateway/Router 142, and the associated packet based access network, to BE 112. BE 112 will then send a setup signaling message, such as a SIP-INVITE message if SIP is used, to CCE 111. CCE 111 looks at the called party information and queries the necessary VolP service related server 114 to obtain the information to complete this call. If BE 113 needs to be involved in completing the call; CCE 111 sends another call setup message, such as a SIP-INVITE message if SIP is used, to BE 113. Upon receiving the call setup message, BE 113 forwards the call setup message, via broadband network 131, to TA 133. TA 133 then identifies the appropriate TDM device 135 and rings that device. Once the call is accepted at location Z by the called party, a call acknowledgement signaling message, such as a SIP-ACK message if SIP is used, is sent in the reverse direction back to the CCE 111. After the CCE 111 receives the call acknowledgement message, it will then send a call acknowledgement signaling message, such as a SIP-ACK message if SIP is used, toward the calling party. In addition, the CCE 111 also provides the necessary information of the call to both BE 112 and BE 113 so that the call data exchange can proceed directly between BE 112 and BE 113. The call signaling path 150 and the call data path 151 are illustratively shown in FIG. 1. Note that the call signaling path and the call data path are different because once a call has been setup up between two endpoints, the CCE 111 does not need to be in the data path for actual direct data exchange.

Note that a customer in location A using any endpoint device type with its associated access network type can communicate with another customer in location Z using any endpoint device type with its associated network type as well. For instance, a customer at location A using IP customer endpoint device 144 with packet based access network 140 can call another customer at location Z using TDM endpoint device 123 with PSTN access network 121. The BEs 112 and 113 are responsible for the necessary signaling protocol translation, e.g., SS7 to and from SIP, and media format conversion, such as TDM voice format to and from IP based packet voice format.

Callers to residential VolP service subscribers will have their calls redirected to voice mail on busy or no answer conditions. If callers know that a called party is engaged in conversation they will frequently call back until the called party is available. Alternatively, they will tend to just hang up or leave a voice message if the party is truly not present. However, the calling party usually does not have the information of the status of the called party endpoint when the call is redirected to voice mail.

To address this need, the present invention enables the VoIP network to play a network announcement as to the true status of a subscribed residential user on busy or unanswered conditions. The called party can subscribe to this service feature so that callers, the calling parties, will be informed that either the user is busy or that the user is not present to receive a call.

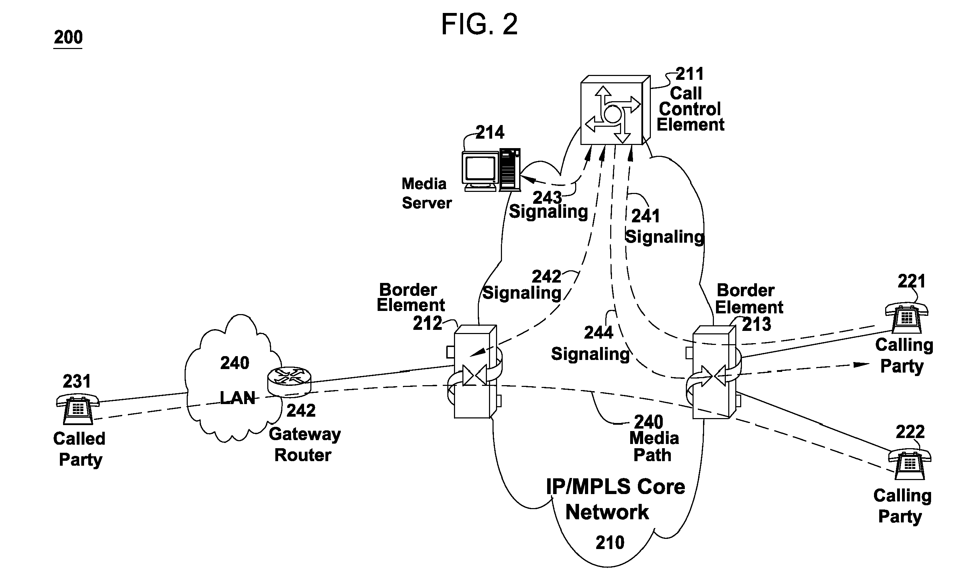

FIG. 2 illustrates an example of notifying the calling party about the status of the called endpoint in a packet-switched network, e.g. a VoIP network. Note that the present invention is a service feature that is subscribed by the called party.

In FIG. 2, the calling party 222 and the called party 231 are already engaged in an ongoing conversation using media path 240. While this call is ongoing, another calling party 221 makes a call to the called party 231. CCE 211 receives a call setup message 241 from calling party 221. CCE 211 then sends a call setup message toward called party 231 to attempt to set up the call. In return, CCE 211 receives a signaling message 242 from BE 212 indicating the endpoint status of called party 231. Specifically, called party 231 does not answer the call because called party 231 is busy on the line conversing with calling party 222. CCE 211 communicates with the Media Server (MS) 214, flow 243, to relay a network announcement, flow 244, to calling party 221 indicating that called party 231 is busy. CCE 211 then forwards the call to the voice mail of called party 231. Upon receiving the endpoint status of called party 231, the calling party 221 decides to not leave a voice mail message and will call back later. Broadly defined, a Border Element is a network element that represents the edge of a VoIP network and serves as a gateway between a customer's network, a VoIP network, and a Public Switched Telephone Network (PSTN) and a Media Server (MS) is a special server that typically handles and terminates media streams, and to provide services such as announcements, bridges, transcoding, and Interactive Voice Response (IVR) messages.

Alternatively, if the called party 231 is not available, CCE 211 will communicate with MS 214, using flow 243, instead to relay a network announcement, using flow 244, to calling party 221 indicating that called party 231 is unavailable. CCE 211 then forwards the call to the voice mail of called party 231. At that point, calling party 221 may decide to leave a voice mail instead so that the called party 231 will return the call later.

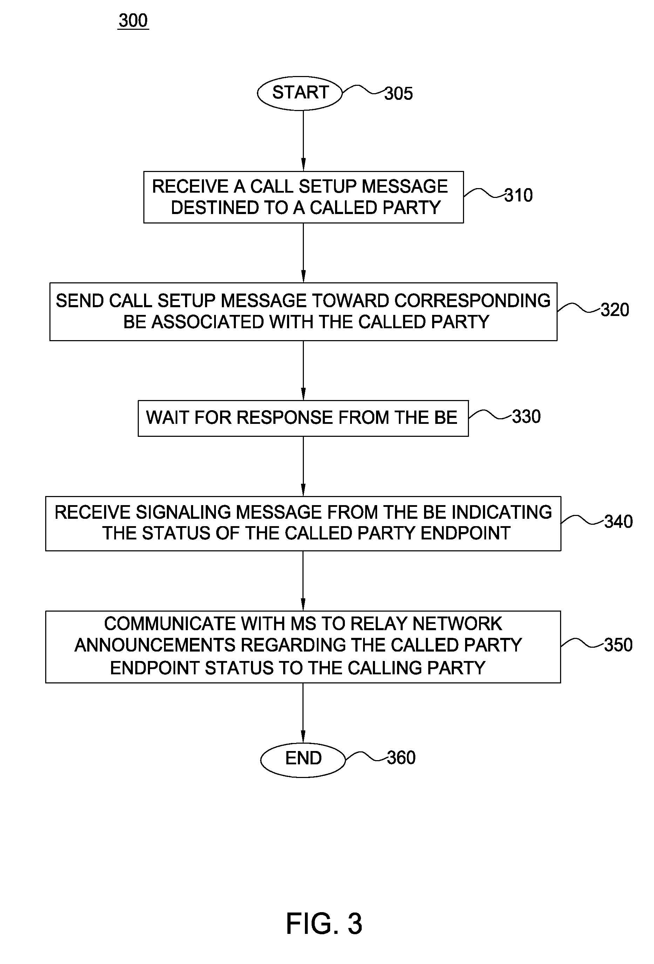

FIG. 3 illustrates a flowchart of a method for notifying the calling party about the status of the called endpoint, e.g., by a CCE in a VoIP network. Method 300 starts in step 305 and proceeds to step 310.

In step 310, the method receives a call setup message destined to a called party endpoint. In step 320, the method sends a call setup message toward the BE that is associated with the called party endpoint. In step 330, the method waits for a signaling message in response to the previously sent call setup message back from the BE. The details of the processing performed by the BE can be found in method 400. In step 340, the method receives a signaling message back from the BE indicating the status of the called party endpoint. The status may indicate that the endpoint is busy, engaged in another call, or unanswered, with no one present to answer. In step 350, the method communicates with the MS to relay a network announcement indicating the returned status of the called party endpoint. The method ends in step 360.

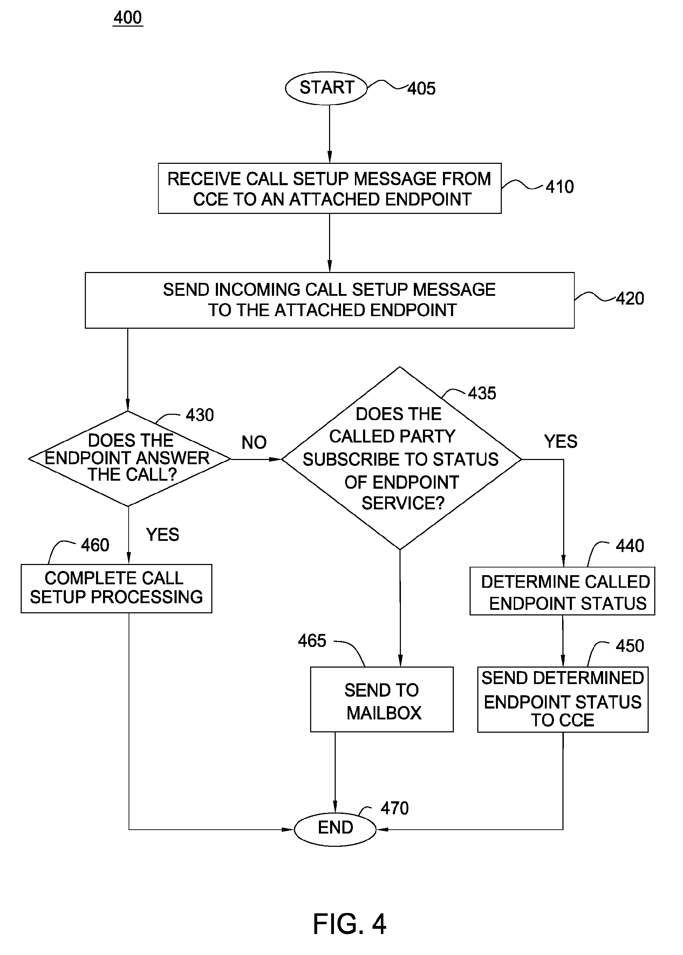

FIG. 4 illustrates a flowchart of a method for determining the status of the called endpoint e.g., by a BE in a VoIP network. Method 400 starts in step 405 and proceeds to step 410.

In step 410, the method receives a call setup message from the CCE. In step 420, the method sends the call setup message towards the called party endpoint. In step 430, the method checks if the called party answers the call. If the call is answered, the method proceeds to step 460; otherwise, the method proceeds to step 435. In step 435, the method checks if the called party has subscribed to the present status of endpoint service. If the called party has subscribed to the service, the method proceeds to step 440; otherwise, the method proceeds to step 465. In step 465, the calling party is directed to a voice mailbox of the called party. In step 440, the method determines the called party endpoint status. The status may indicate that the endpoint is busy, engaged in another call, or unanswered, with no one present to answer. In step 450, the method sends the endpoint status to the CCE. In step 460, the method continues with normal call setup procedures. The method ends in step 470.

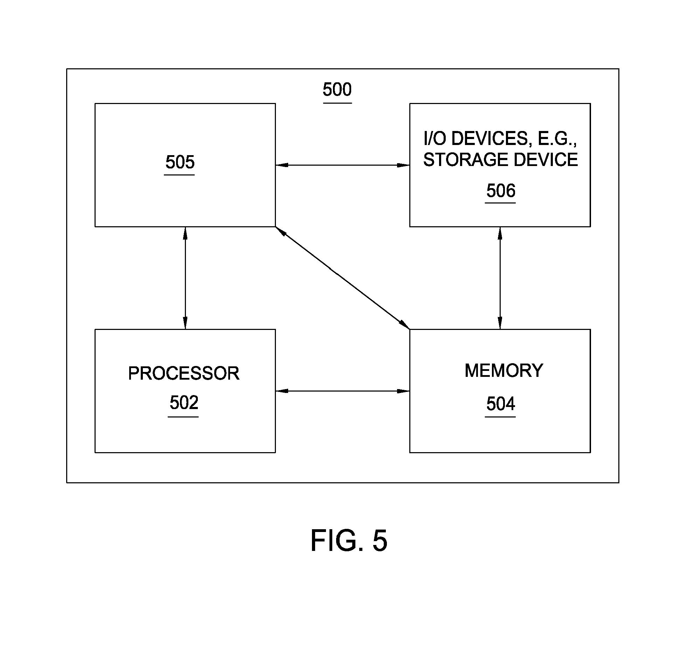

FIG. 5 depicts a high level block diagram of a general purpose computer suitable for use in performing the functions described herein. As depicted in FIG. 5, the system 500 comprises a processor element 502 (e.g., a CPU), a memory 504, e.g., random access memory (RAM) and/or read only memory (ROM), a status notifying module 505, and various input/output devices 506 (e.g., storage devices, including but not limited to, a tape drive, a floppy drive, a hard disk drive or a compact disk drive, a receiver, a transmitter, a speaker, a display, a speech synthesizer, an output port, and a user input device (such as a keyboard, a keypad, a mouse, and the like)).

It should be noted that the present invention can be implemented in software and/or in a combination of software and hardware, e.g., using application specific integrated circuits (ASIC), a general purpose computer or any other hardware equivalents. In one embodiment, the present status notifying module or process 505 can be loaded into memory 504 and executed by processor 502 to implement the functions as discussed above. As such, the present status notifying module 505 (including associated data structures) of the present invention can be stored on a computer readable medium or carrier, e.g., RAM memory, magnetic or optical drive or diskette and the like.

While various embodiments have been described above, it should be understood that they have been presented by way of example only, and not limitation. Thus, the breadth and scope of a preferred embodiment should not be limited by any of the above-described exemplary embodiments, but should be defined only in accordance with the following claims and their equivalents.

## Claims

1. A method for providing endpoint status in a communication network, comprising:
receiving a call setup message from a calling party destined to an endpoint of a called party;
determining whether said called party has subscribed to a status of endpoint service; and
returning a status of said endpoint of said called party to said calling party if said call cannot be established.

2. The method of claim 1, wherein said communication network is a Voice over Internet Protocol (VolP) network.

3. The method of claim 1 or 2, wherein said call setup message is received by a call control element (CCE).

4. The method of claim 1, 2 or 3, wherein said receiving comprises:
sending said call setup message towards a Border Element (BE) associated with said called party endpoint; and
receiving a signaling message in response to said call setup message from said BE indicating said status of the called party endpoint.

5. The method of any one of the preceding claims, wherein said status of said called party endpoint comprises at least one of: a busy condition and an unanswered condition.

6. The method of any one of the preceding claims, wherein said returning comprises:
relaying a network announcement indicating said status of said called party endpoint from a media server (MS) to said calling party.

7. The method of any one of the preceding claims, further comprising:
subscribing to said status of endpoint service by said called party.

8. A computer-readable medium having stored thereon a plurality of instructions, the plurality of instructions including instructions which, when executed by a processor, cause the processor to perform the steps of a method for providing endpoint status in a communication network, comprising:
receiving a call setup message from a calling party destined to an endpoint of a called party;
determining whether said called party has subscribed to a status of endpoint service; and
returning a status of said endpoint of said called party to said calling party if said call cannot be established.

9. The computer-readable medium of claim 8, wherein said communication network is a Voice over Internet Protocol (VolP) network.

10. The computer-readable medium of claim 8 or 9, wherein said call setup message is received by a call control element (CCE).

11. The computer-readable medium of claim 8, 9 or 10, wherein said receiving comprises:
sending said call setup message towards a Border Element (BE) associated with said called party endpoint; and
receiving a signaling message in response to said call setup message from said BE indicating said status of the called party endpoint.

12. The computer-readable medium of any one of claims 8 to 11, wherein said status of said called party endpoint comprises at least one of: a busy condition and an unanswered condition.

13. The computer-readable medium of any one of claims 8 to 12, wherein said returning comprises:
relaying a network announcement indicating said status of said called party endpoint from a media server (MS) to said calling party.

14. The computer-readable medium of any one of claims 8 to 13, further comprising:
subscribing to said status of endpoint service by said called party.

15. A system for providing endpoint status in a communication network, comprising:
means for receiving a call setup message from a calling party destined to an endpoint of a called party;
means for determining whether said called party has subscribed to a status of endpoint service; and
means for returning a status of said endpoint of said called party to said calling party if said call cannot be established.

16. The system of claim 15, wherein said communication network is a Voice over Internet Protocol (VoIP) network.

17. The system of claim 15 or 16, wherein said call setup message is received by a call control element (CCE).

18. The system of claim 15, 16 or 17, wherein said receiving means comprises:
means for sending said call setup message towards a Border Element (BE) associated with said called party endpoint; and
means for receiving a signaling message in response to said call setup message from said BE indicating said status of the called party endpoint.

19. The system of any one of claims 15 to 18, wherein said status of said called party endpoint comprises at least one of: a busy condition and an unanswered condition.

20. The system of any one of claims 15 to 19, wherein said returning means comprises:
means for relaying a network announcement indicating said status of said called party endpoint from a media server (MS) to said calling party.
